# EUROPÄISCHE PATENTANMELDUNG

(11) **EP 1 357 483 A2**
(43) Veröffentlichungstag der Anmeldung: **29.10.2003**
(21) Anmeldenummer: 02012263.6
(22) Anmeldetag: 04.06.2002
(51) Int. Cl.: G06F 17/30

(54) **Dynamisches Datenbankinterface**

(30) Priorität: 24.04.2002 DE 10218401
(71) Anmelder: Informationsverarbeitung Leverkusen GmbH (IVL), 51371 Leverkusen (DE)
(72) Erfinder: Lauterjung, Andreas, 51373 Leverkusen (DE); Bönnen, Thomas, 51373 Leverkusen (DE); Errens, Karl-Josef, 51377 Leverkusen (DE)
(74) Vertreter: Springorum, Harald, Dr.

(57) **Zusammenfassung**

Verfahren zum Betrieb eines dynamischen Datenbankinterface zur Kommunikation einer Datenbanksystem-Applikation mit einem Datenbanksystem, welches
(i) einen parametrierten Datenbanksystem-Funktionsaufruf für das Datenbanksystem von der Datenbanksystem-Applikation im XML-Format codiert empfängt,
(ii) diesen, soweit möglich, in ein zum Datenbanksystem kompatibles Format umsetzt,
(iii) den, soweit möglich, entsprechenden parametrierten Datenbanksystem-Funktionsaufruf zum Datenbanksystem hin in einem zum Datenbanksystem kompatiblen Format codiert sendet,
(iv) falls ein Datenbanksystem-Funktionsaufruf erfolgte, ein parametriertes Ergebnis von dem Datenbanksystem in einem zum Datenbanksystem kompatiblen Format codiert empfängt,
(v) falls ein Datenbanksystem-Funktionsaufruf erfolgte, das parametrierte Ergebnis in das XML-Format umsetzt, und
(vi) falls ein Datenbanksystem-Funktionsaufruf erfolgte, das empfangene parametrierte Ergebnis im XML-Format codiert wieder an die Datenbanksystem-Applikation zurücksendet.

## Beschreibung

Die vorliegende Erfindung betrifft ein dynamisches Datenbankinterface zur flexiblen Ankopplung eines Applikationsystems an Datenbanksyteme.

Es erweist sich in der Praxis immer wieder als ausgesprochen schwierig verschiedene Applikationen an vorhandene Datenbanksysteme anzukoppeln, obwohl hier ein großer Bedarf besteht.

Unter Datenbanksystemen soll dabei hier ein Datenbanksystem im allgemeineren Sinne verstanden werden, also sowohl herkömmliche Datenbanksysteme, die die Daten (wie etwa Benutzerdaten, Beschreibungsdaten), ein Datenabfrage- bzw. Datenmanipulationsinterface und/oder ein Verwaltungssystem [etwa die Schemaverwaltung] sowie u.U. eine Zugriffssynchronisation aufweisen, als auch Datenbanksysteme neuerer Art, wie sie etwa von der OMG (Open Management Group) vorgesehen werden und die darüber hinaus auch höhere Konzepte realisieren, etwa indem diese auf der konzeptionellen Ebene. etwa durch neue Datentypen und/oder neue Funktionalitäten erweiterbar sind oder auch indem sie weitere Eigenschaften, wie etwa Persistenz, Transaktionskomponenten oder auch Recovery-Komponenten besitzen. Auch können diese Datenbanksysteme erweiterten Typs neben den sonst üblichen Komponenten zur Anfrage- und Datenmanipulation bereits komplexe Funktionen, etwa im Hinblick auf bestimmte Anwendungen, die auf der Datenbank operieren beinhalten. Auch komplette Programmierumgebungen zur Veränderung oder Wartung des Datenbanksystems können Bestandteil solcher Datenbanksysteme sein. Als ein Beispiel für ein solches komplexeres Datenbanksystem sei etwa das SAP(geschützte Marke)-System genannt. Derartige Datenbanksysteme können selbst sich intern wiederum eines Datenbanksystems im konventionelleren, eingangs genannten Sinne, bedienen, wie etwa das SAP-Datenbanksystem mit einer Oracle(geschütze Marke)-Datenbank arbeiten kann.

Oftmals existieren nämlich bereits große Datenbanksysteme mit umfangreichen Datenbeständen, die aber unterschiedlichen Anwendungen zugänglich gemacht werden sollen. Andererseits weisen diese Anwendungen jedoch oft keine geeigneten Schnittstellen zur Ankopplung an die Datenbanksysteme auf, so daß in diesen Fällen entweder der Datenbestand in ein. zur Applikation (Anwendung) kompatibles Datenbanksystem überführt, oder aber eine für die Applikation geeignete Datenbanksystemschnittstelle erstellt werden muß.

Der erste Fall ist ausgesprochen aufwendig und arbeitsintensiv und weist darüber hinaus den Nachteil auf, daß bei Verwendung mehrerer Applikationen für unterschiedliche Datenbanksysteme, aber gleichen Datenbestand, die Daten redundant gehalten werden müssen, was infolge des dann notwendigen Abgleichs untereinander fehleranfällig ist und zu Inkonsistenzen des Datenbestandes führen kann.

Aber auch die zweite Lösung ist sehr arbeitsaufwendig, da sie die Erstellung eines individuell zu erstellenden Interface zwischen jeder Applikation und dem Datenbanksystem voraussetzt.

Es ist daher Aufgabe der vorliegenden Erfindung eine möglichst flexible Anbindungslösung von Datenbanksystemen an Applikationen anzugeben, die eine individuelle Interfaceprogrammierung möglichst vermeidet oder zumindest den hierzu notwendigen Aufwand senkt.

Diese Aufgabe wird erfindungsgemäß durch ein Verfahren zum Betrieb eines dynamischen Datenbankinterface zur Kommunikation einer Datenbanksystem-Applikation mit einem Datenbanksystem gelöst, welches
i. einen parametrierten Datenbanksystem-Funktionsaufruf für das Datenbanksystem von der Datenbanksystem-Applikation im XML-Format codiert empfängt,
ii. diesen, soweit möglich, in ein zum Datenbanksystem kompatibles Format umsetzt,
iii. den, soweit möglich, entsprechenden parametrierten Datenbanksystem-Funktionsaufruf zum Datenbanksystem hin in einem zum Datenbanksystem kompatiblen Format codiert sendet,
iv. falls ein Datenbanksystem-Funktionsaufruf erfolgte, ein parametriertes Ergebnis von dem Datenbanksystem in einem zum Datenbanksystem kompatiblen Format codiert empfängt,
v. falls ein Datenbanksystem-Funktionsaufruf erfolgte, das parametrierte Ergebnis in das XML-Format umsetzt und
vi. falls ein Datenbanksystem-Funktionsaufruf erfolgte, das empfangene parametrierte Ergebnis im XML-Format codiert wieder an die Datenbanksystem-Applikation zurücksendet.

Ferner wird diese Aufgabe auch durch ein dynamisches Datenbankinterface System gelöst, welches es ein Datenverarbeitungssystem mit einem Prozessor und einem Speicher aufweist, das programmtechnisch so eingerichtet ist, daß es nach dem erfindungsgemäßen Verfahren zum Betrieb eines dynamischen Datenbankinterface arbeitet, wobei dies für alle Ausführungsformen des erfindungsgemäßen Verfahrens ebenso gilt.

Gleiches gilt selbstverständlich auch für ein Computerprogramm, welches Instruktionen aufweist, die zur Durchführung des erfindungsgemäßen Verfahrens eingerichtet sind, wobei dies ebenso für alle Ausführungsformen des erfindungsgemäßen Verfahrens gilt.

Eine weitgehende Unanhängigkeit von etwaigen nicht standardisierten Applikationsformaten wird hier bereits durch die Verwendung des XML-Formats (XML = Extended Markup Language) erreicht, welches dem Standard der W3C (World Wide Web Consortium) entspricht, was eine weite Verbreitung sicherstellt. Es handelt sich bei diesem Datenformat für die Datenkommunikation um einen Satz von Regeln, man spricht auch von Richtlinien oder Konventionen, durch die strukturierte Daten zum Austausch zwischen unterschiedlichen Systemen zur Verfügung gestellt werden.

Die XML selbst ist modular, so daß innerhalb der Norm eigene Dokumentenformate definierbar sind, indem man andere Formate kombiniert oder wiederbenutzt. Somit ist sichergestellt, dass alle Zielsysteme mit diesem Format kommunizieren können. Ist noch keine XML-Schnittstelle für eine Applikation vorhanden, so können zumindest vorhandene Applikationsschnittstellen - schon aufgrund der vorstehend erwähnten Eigenschaften - leicht auf XML abgebildet werden, so daß eine flexible Anbindungslösung von Datenbanksystemen an Applikationen gegeben ist, die bereits eine XML-Schnittstelle aufweisen, was zunehmend der Fall ist, zumindest aber der Aufwand einer Interfaceprogrammierung gesenkt wird, da nur noch ein leichter zu erstellendes XML-Interface erstellt werden muß.

Vorzugsweise empfängt das Verfahren zum Betrieb eines dynamischen Datenbankinterface nach der vorliegenden Erfindung von der Datenbanksystem-Applikation den parametrierten Datenbanksystem-Funktionsaufruf für das Datenbanksystem im XML-Format so codiert, daß dieser neben dem jeweiligen Parameterwert oder Parameterwerten
- auch eine Identifikation des Parameters, vorzugsweise einen Parameterbezeichner, und/oder
- auch Informationen über die Struktur des Parameters, und/oder
- Informationen darüber, ob der jeweilige Parameter ein Export- oder ein Importparameter ist
aufweist.

Gleiches kann auch für das vom Datenbanksystem empfangene parametrierte Ergebnis vorgesehen sein, welches in das XML-Format so umgesetzt und wieder an die Datenbanksystem-Applikation zurücksendet wird.

In einer Ausführungsform des erfindungsgemäßen Verfahrens wird, vorzugsweise vor Schritt (iii), besonders bevorzugterweise anhand einer eigenen Umsetzungsdatenbasis, überprüft, ob der von der Datenbank-Applikation empfangene Datenbanksystem-Funktionsaufruf von Seiten des Datenbanksystems auch tatsächlich zum Aufruf zur Verfügung steht und/oder, ob alle vom Datenbanksystem unbedingt für die Ausführung des Datenbanksystem-Funktionsaufrufes notwendigen Parameter auch von der Datenbank-Applikation empfangen wurden, wobei es im negativen Falle eine Fehlermeldung im XML-Format codiert wieder an die Datenbanksystem-Applikation zurückgesendet wird.

Die Umsetzung erfolgt dabei, vorzugsweise in Schritt (ii), besonders bevorzugterweise anhand einer eigenen Umsetzungsdatenbasis, etwa anhand einer Identifikation der Parameter (z.B. anhand der Parameterbezeichner und/oder der Parameterstruktur und/oder anhand dessen, ob es sich um Ex- oder Importparameter handelt), wobei hier festgestellt wird, welche von der Datenbanksystem-Applikation empfangenen Parameter auf welche zum Datenbanksystem kompatiblen Parameter umgesetzt werden müssen, was umgekehrt vom Datenbanksystem in Richtung der Datenbanksystem-Applikation ebenso realisiert sein kann.

Bei dem erfindungsgemäßen Verfahren zum Betrieb eines dynamischen Datenbankinterface werden die Funktionen des Datenbanksystems (etwa sogenannte BAPIS und/oder RFC [Remote Function Call]-fähige Funktionsbausteine) somit nach dieser Spezifikation 1:1 in XML abgebildet. Es werden lediglich die Felder gefüllt, die vorhanden sind. Sind zu wenig Felder vorhanden, werden nur Datenbanksystem-Felder, etwa SAP-Felder zurück geschickt, die eine Entsprechung auf der Applikationsseite, etwa auf Seiten eines Geographischen Informations System (GIS), haben. Insgesamt funktioniert der Ablauf nach den Regeln der Mengenlehre, d.h. ist die Datenbank-Seite eine Teilmenge der Applikations-Seite, dann werden die Parameter des Datenbanksystems vollständig in die Applikation importiert und umgekehrt. Allerdings zeigt das Datenbanksystem an, wenn ein Pflichtfeld (im SAP-System etwa ein sogenanntes mandatory field) gefüllt werden muß. In Kurzform läuft das Protokoll folgendermaßen ab:
1.Funktionsaufruf
2.Überprüfung, ob die Funktion vorhanden ist; wenn ja
3.Überprüfung, ob die Struktur stimmt (Feldprüfung, Tabellenprüfung); wenn ja
4.die Funktion wird ausgeführt

Gibt es die Funktion nicht → dann ist das System aufgefordert, eine Fehlermeldung auszugeben.

Gibt es die Struktur nicht → dann soll das System ebenfalls eine Fehlermeldung ausgeben.

Somit ist das erfindungsgemäße Verfahren fehlertolerant, und es kann für jedes Datenbanksystem in gleicherweise benutzt werden.

Nachfolgend wird die Funktionsweise noch einmal zum besseren Verständnis anhand eines Beispiels erläutert, bei dem SAP als Datenbanksystem verwendet wird.

### Funktion : BAPI_CALL_DEMO_DATA

- Funktionsname: BAPI_CALL_DEMO_DATA
- Importportparameter: A (Struktur), B (Parameter)
- Exportparameter: C (Struktur), D (Parameter)
- Tabellen: E (Tabelle )

### Umsetzung in XML:

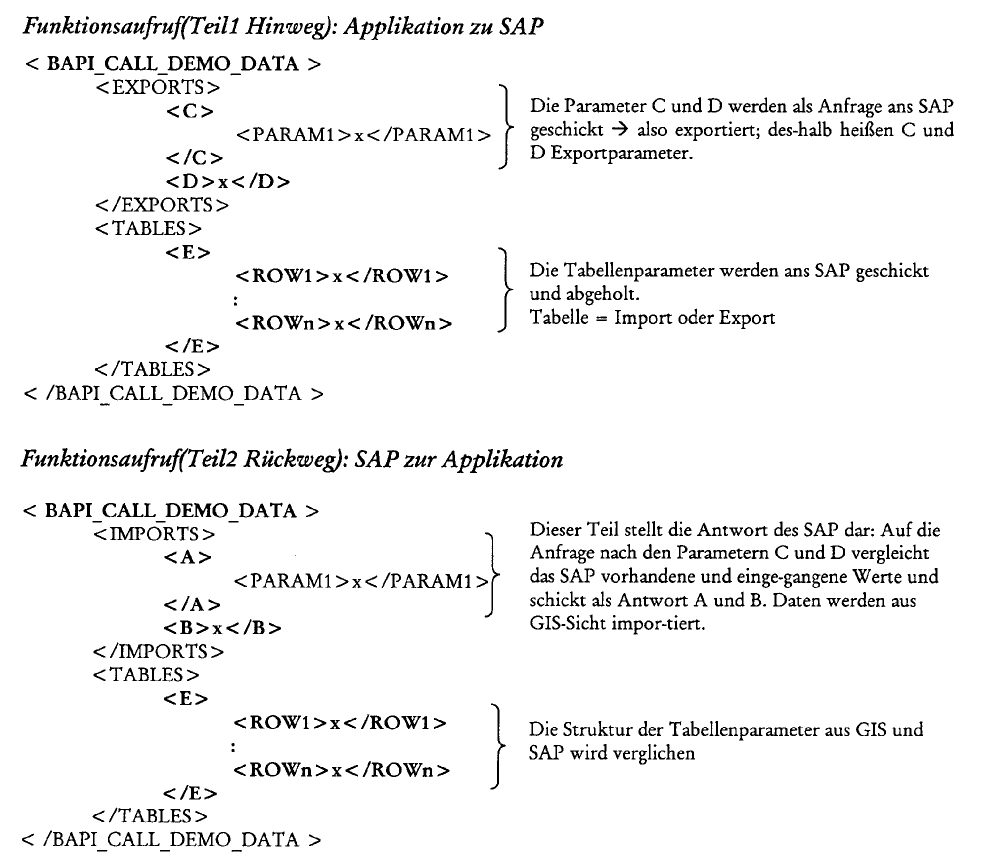

Eine besonders bevorzugte Ausführungsform des erfindungsgemäßen Verfahren zum Betrieb eines dynamischen Datenbankinterface ist dadurch gekennzeichnet, daß als Datenbanksystem-Applikation ein geographisches Informationssystem (GIS) und als Datenbanksystem zumindest ein Strukturdatenbanksystem, vorzugsweise mit einer relationalen Datenbank, dient, in welcher strukturelle, d.h. nicht räumliche Daten von Objekten aus einer dem geographischen Informationssystem ebenfalls zugehörigen Geodatenbank hinterlegt sind, wobei die Geodatenbank entsprechend der räumlichen Position von Objekten, vorzugsweise als QuadTreee oder relational, organisiert ist und hierin zumindest die räumlichen Daten, vorzugsweise die geometrischen und/oder geographischen Daten der Objekte hinterlegt sind, wobei zusätzlich zu den räumlichen Daten für die jeweiligen Objekte auch dem jeweiligen Objekt zugeordnete Verweisinformationen in der Geodatenbank hinterlegt sind, die die in der Geodatenbank hinterlegten räumlichen Objektdaten zumindest einem Objekt im Strukturdatenbanksystem zuordnen, und weiterhin bei einem Zugriff auf ein Objekt der Geodatenbank automatisch mittels der hier hinterlegten Verweisinformationen die Zuordnung auf die zugeordneten Objekte des Strukturdatenbanksystems über das dynamische Datenbankinterface herstellt und hierdurch auch den Zugriff auf die hier hinterlegten, zum Objekt der Geodatenbank zugehörigen Strukturdaten erlaubt.

Geographische Informationssysteme (GIS) stellen ihrem Benutzer meist zwei grundsätzlich unterschiedliche Arten von Informationen zur Verfügung nämlich zum einen räumliche Daten, also die Daten über die geometrischen Verhältnisse, wie etwa Abmessungen der Objekte auf die mittels des geographischen Informationssystems zugegriffen werden kann und die durch das GIS auch graphisch dargestellt werden können und zum anderen weitere Daten nicht geometrischer Natur, die den einzelnen Objekten zugeordnet werden.

Als Beispiel sei hier ein GIS angeführt, welches die Telefonanschlüsse eines bestimmten Gebietes dokumentieren helfen soll. Zum einen liegen dann räumliche Daten über die Lage der Kabelstränge zu den einzelnen Teilnehmern vor, zum anderen aber auch Daten zu den Teilnehmern selbst, etwa ihre Adresse, ihre jeweiligen Vertragskonditionen, die Zuständigkeit von Servicemitarbeitern, die Art der Installation, etwa welche Komponenten dort eingesetzt wurden, die zugehörigen Verweise auf womögliche Stücklisten dazu bis hin zu den Materialnummern der betreffenden Ersatzteile, die sich aus den Stücklisten ergeben.

Dadurch, daß ein GIS diese sehr unterschiedlichen Daten, nämlich räumliche Daten einerseits und strukturelle Daten andererseits handhaben muß, ergibt sich nun das nachfolgend beschriebene technische Problem.

Grundsätzlich sind nämlich die Anforderungen, die an ein Datenbanksystem zu stellen sind, das die beiden zuvor erwähnten Arten von Daten effektiv verwalten soll völlig unterschiedlich:

Zur Verwaltung räumlicher Daten ist es aufgrund der hierbei anfallenden hohen Datenmengen aus Gründen der Reaktionsgeschwindigkeit auf Datenbankabfragen hin wünschenswert, daß auf die Objekte anhand ihrer räumlichen Daten besonders effektiv zugegriffen werden kann, etwa dadurch, daß die räumlichen Daten von solchen Objekten, die in der Realität geographisch benachbart sind, auch tatsächlich physikalisch oder zumindest logisch eng 'benachbart' gespeichert werden. Dies ist etwa deshalb erforderlich, um es zu ermöglichen, daß der Verwender eines GIS in der Lage ist, mittels entsprechender Navigationsmittel (etwa einer Maus, einem Trackball oder auch ausgewählten Tasten der Bedientastatur) effektiv durch die Welt des graphischen Abbildes der hinterlegten räumlichen Daten zu navigieren, etwa hierin scrollen zu können. Eine solche Organisation der räumlichen Daten kann auf verschiedene Arten, etwa durch die Verwendung sogenannter QuadTrees erreicht werden. Alle diese Verfahren nutzen zum schnellen Zugriff auf die räumlichen Daten deren wesensimmanente Eigenschaft aus, daß die Objekte durch ihre Position bestimmt sind. Hierdurch kann dem Erfordernis des effektiven Zugriffs auf die räumlichen Daten Genüge getan werden, dies jedoch um den Preis einer recht starren, eben am Positionsraster orientierten, Datenbankstruktur.

Diese aus Gründen der Effektivität notwendige technische Organisation der räumlichen Daten ist jedoch für die strukturellen Daten der jeweiligen Objekte äußerst ungeeignet. Strukturelle Objektdaten werden heute üblicherweise nach dem Stand der Technik in relationalen Datenbanken hinterlegt, die ihrem jeweiligen Verwender eine logische Sicht der Dinge, nämlich der Objekte und ihrer Verhältnisse untereinander vermittelt, ohne daß der Benutzer mit der tatsächlichen technischen Realisierung dieser Datenbanken weiter belastet wäre.

So stellt sich das unmittelbare 'Anhängen' der strukturellen Daten an die technische Organisation der räumlichen Daten in deren Datenbasis selbst als äußerst unbefriedigend und als technische 'Krücke' dar, da deren starres nur an der räumlichen Position orientiertes Organistionsprinzip für die strukturellen Daten und ihre vielfältigen Relationen untereinander denkbar ungeeignet ist.

Daher besteht die derzeitige nach dem Stand der Technik bekannte Lösung meist darin, nur die notwendigsten strukturellen Daten an die räumlichen Daten anzuhängen und die strukturellen Daten parallel und völlig unabhängig in einer eigenen relationalen Datenbank zu organisieren. Diese Lösung weist jedoch gleichfalls entscheidende Nachteile auf. Es müssen so nämlich zwei unterschiedliche Datenbanken eingerichtet und unterhalten werden, wozu es jeweils kundiger Bedienkräfte bedarf, deren Idealtypus, in Gestalt eines beider Systeme Kundigen nur schwer zu finden ist. Damit sind Inkonsistenzen in der Führung der Bestände beider Datenbanken geradezu vorprogrammiert, da die Bediener der einen Datenbank jeweils die Bediener der anderen Datenbank von vorgenommen Änderungen zwecks Nachtrag unterrichten müssen und umgekehrt, was in der Praxis bei genügend großen Systemen allein schon aufgrund menschlichen Versagens, wie Bequemlichkeit, Vergessen oder auch Uneinsichtigkeit vorkommt.

Es ist daher problematisch ein geographisches Informationssystem (GIS) anzugeben, welches sowohl die effektive Verwaltung räumlicher Daten wie auch die problemadäquate Verwaltung struktureller Daten der in GIS verwalteten Objekte ermöglicht, ohne daß es der parallelen manuellen Führung zweier unterschiedlich strukturierter Datenbanken bedarf. Dies kann jedoch mit der vorstehend beschriebenen Ausführungsformen des dynamischen Datenbankinterface nach der vorliegenden Erfindung leichter gelingen.

Diese Lösung ermöglicht nämlich eine effiziente Verwaltung und insbesondere einen effizienten Zugriff auf die ihrem Wesen nach unterschiedlichen räumlichen und strukturellen Daten zu gestatten, indem den nach räumlichen Kriterien organisierten Daten in der Geodatenbank zumindest eine Verweisinformation auf die zugehörigen strukturellen Daten in dem Strukturdatenbanksystem zugeordnet ist. Dies kann etwa durch Hinterlegung eines Zugriffsschlüssels für das Strukturdatenbanksystem in der Geodatenbank zum jeweiligen Objekt geschehen. Das zum GIS gleichfalls zugehörige Zugriffsmodul kann dann mittels des beim Zugriff auf die Geodatenbank - welcher zumeist nach räumlichen Kriterien, also etwa mittels eines räumlichen Schlüssel geschieht - dort als Verweisinformation gefundenen Schlüssels auf die zugehörigen Objekte des Strukturdatenbanksystems zugreifen.

Anzumerken in diesen Zusammenhang ist, daß die Geodatenbank im Sinne der vorliegenden Erfindung auch dann als entsprechend der räumlichen Position von Objekten organisiert anzusehen ist, wenn diese Organisation ganz oder zum Teil auf rein logischer Ebene erfolgt; es bedarf dazu, insbesondere angesichts der fortschreitenden Datenbanktechnik, nicht unbedingt einer physikalischen Organisation der Geodatenbank entsprechend der räumlichen Position von Objekten.

Vorzugsweise sind zusätzlich zu den strukturellen Daten für die jeweiligen Objekte auch dem jeweiligen Objekt zugeordnete Rück-Verweisinformationen in dem Strukturdatenbanksystem hinterlegt, die die in dem Strukturdatenbanksystem hinterlegten strukturellen Objektdaten zumindest einem Objekt in der Geodatenbank zuordnen und die über das dynamische Datenbankinterface vom geographischen Informationssystem abgerufen werden oder zumindest abgerufen werden können. Hierdurch ist es sodann möglich bei einem Zugriff auf das Strukturdatenbanksystem auch Rückschlüsse auf die Objekte der Geodatenbank zu ziehen. So kann etwa in diesem Falle festgestellt werden, in welchen Häusern sich etwa Gasanschlußbauteile eines bestimmten Herstellers befinden. Vorzugsweise ist hierzu ein Rück-Zugriffsmodul vorgesehen, welches dies anhand der Rück-Verweisinformation bzw. Rück-Verweisinformationen leistet.

Vorzugsweise ist bei der vorliegenden Erfindung die Geodatenbank als QuadTree organisiert, was sich für geographische Informationssysteme, die nach räumlichen Gesichtspunkten organisiert sind, besonders bewährt hat. Das System Smallworld (geschützte Marke) stellt etwa eine solche für die vorliegende Erfindung geeignete Ausführung dar.

Es ist aber auch möglich, daß die Geodatenbank entsprechend der räumlichen Position von Objekten als relationale Datenbank organisiert ist. Hierbei kann sie dann auch rein logisch entsprechend der räumlichen Position von Objekten organisiert werden, etwa indem zwischen einander benachbarten Objekte spezielle - eben geometrische - Relationen angelegt werden.

Das Strukturdatenbanksystem weist vorzugsweise eine relationale Datenbank auf, wie sie etwa in SAP (geschützte Marke)-Systemen verwendet wird, was dem Aufbau der strukturellen Daten schon vom logischen Ansatz her entspricht. Aber auch Schemadatenbanken (CODASYL) oder auch hierarchische oder assoziative Datenbanken eignen sich hierfür gut.

Um das dynamische Datenbankinterface nach der vorliegenden Erfindung noch besser auf die Benutzung durch viele Applikationen einzurichten, kann ferner ein Verfahren zum Betrieb eines Poolmanagers zur Konnektion einer Datenbanksystem-Applikation mit mindestens einem Datenbanksystem mittels mindestens des dynamischen Datenbankinterface, welches jeweils nach dem Verfahren nach der vorliegenden Erfindung betrieben wird, vorgesehen sein, wobei der Poolmanager Anforderungen von der Datenbanksystem-Applikation zur Kommunikation mit dem Datenbanksystem oder den Datenbanksystemen empfängt und sodann für die anfordernde Datenbanksystem-Applikation eine der anfordernden Datenbanksystem-Applikation zugeordnete Instanz seiner selbst oder eines Kommunikations-Moduls jeweils mit mindestens einem zugehörigen dynamischen Datenbankinterface erzeugt oder zuordnet.

Der Poolmanager, vorzugsweise ein Corba Poolmanager, dient hier also dazu Applikationen, die selbständig keine Verbindung zu einem Hostsystem aufbauen können, den Zugriff zu - womöglich verschiedenen - Datenbanksystemen zu ermöglichen. Somit ist der Poolmanager als ein Vermittler zwischen den Anforderungen eines anfragenden Systems, also der Datenbanksystem-Applikation und dem Datenbanksystem anzusehen. In allen Fällen muß der Poolmanager seine Leistungen betriebssystemunabhängig erbringen. Ebenso soll der Poolmanager unabhängig von der Programmiersprache der anfragenden Applikation sein. Im gleichen Umfang wird eine Unabhängigkeit von propietären Kommunikationssystemen des Datenbanksystems gefordert.

Damit der Poolmanager die geforderten Bedingungen erfüllen kann, können seine nach außen liegenden Schnittstellen dem Standard des W3C (World Wide Web Consortium) entsprechen. Dabei handelt es sich bei dem Datenformat für die Datenkommunikation um XML (Extended Markup Language), mittels der plattformunabhängig durch einen Satz von Regeln, man spricht auch von Richtlinien oder Konventionen, strukturierte Daten zum Austausch zwischen unterschiedlichen Systemen zur Verfügung gestellt werden.

Die XML selbst ist modular, so daß innerhalb der Norm eigene Dokumentenformate definierbar sind, indem man andere Formate kombiniert oder wiederbenutzt. Somit ist sichergestellt, dass alle Zielsysteme mit dem neuen Format kommunizieren können, wobei die Interpretation des Inhaltes des XML-Dokuments vorzugsweise durch das Corba-Modul, besonders bevorzugterweise durch ein Corbaserver-Modul erfolgt.

Die Datenkommunikation wird somit in dieser Ausführungsform durch die Corba-Spezifikation festgelegt. Der Poolmanager als Corba Poolmanager ist dann ein Server, welcher als unabhängiges System z.B. als Dienst oder auf einem eigenen Datenverarbeitungssystem implementiert ist bzw. abläuft und bei Anforderung durch eine Applikation den Verbindungsaufbau zum Datenbanksystem sowie eine transparente Kommunikation der Daten vom und zu dem Datenbanksystem übernimmt.

Der Poolmanager, vorzugsweise Corba Poolmanager steht etwa als http-Server fremden Applikationen zur Verfügung. Da hier keine propietäre Kommunikationstechnik Anwendung findet, ist eine Plattformunabhängigkeit sichergestellt.

Die rufende Applikation baut ihre Anfrage etwa in einem XML-Paket auf, welches über http an den Poolmanager, vorzugsweise Corba Poolmanager geschickt wird. Sobald dieser eine Anfrage erhält, wird für diese Anfrage vorzugsweise eine eigene Instanz des Poolmanagers aufgebaut. Diese Instanz bleibt so lange persistent, bis die gesamte Kommunikation zwischen der fragenden Applikation und dem Datenbanksystem beendet wird.

Dadurch, dass eine eigene Instanz aufgebaut wird, wird auch jeweils eine eigene Verbindung zu dem Datenbanksystem erzeugt. Der Vorteil dieser Struktur liegt darin, dass somit eigene Benutzerrechte und eigene Adressräume für die in Frage kommende Verbindung bestehen.

Die Applikationen, die den Poolmanager nutzen, müssen darüber hinaus von keinem speziellen Typ sein.

Sobald eine Instanz des Poolmanagers, vorzugsweise Corba Poolmanagers erzeugt ist, wird eine Verbindung, vorzugsweise eine Corba-Verbindung zu dem Hostsystem, also dem Datenbanksystem erzeugt. Ist die Zahl der instanziierbaren Verbindungen auf dem entsprechenden für den Poolmanager als Server dienenden Datenverarbeitungssystem zu gering, oder meldet sich das Hostsystem temporär nicht, verbleibt der Verbindungsaufbau vorzugsweise in einer Warteschleife.

Um zum richtigen Datenbanksystem zu verbinden, wird vorzugsweise von der Instanz des Poolmanagers oder des Kommunikations-Moduls ein Connectstring innerhalb des XML-Datenpaketes ausgewertet. Dadurch wird das jeweilige Datenbanksystem als Zielsystem identifiziert und eine geeignete Verbindung hierzu geschaltet.

Nach dem Verbindungsaufbau dient die Instanz des Poolmanagers oder des Kommunikations-Moduls in Gestalt eines Corba-Moduls, vorzugsweise eines Corbaserver-Moduls als Übersetzer zwischen den Informationen in dem XML-Paket und den für das Datenbanksystem notwendigen Datenpaketen im Zusammenarbeit mit einem jeweiligen dynamischen Datenbankinterface zum Datenbanksystem nach der hier vorliegenden Erfindung, auch Bridge genannt.

Im Falle eines SAP-Systems als Datenbanksystem wird dann vorzugsweise ein der Instanz des Kommunikations-Moduls oder des Poolmanagers jeweilig zugehöriges dynamisches Datenbankinterface als eine sogenannte SAP-Bridge aufgebaut, in der die Kommunikation zum SAP über die SAP eigenen RFC erfolgt. Ein Corbaserver-Modul interpretiert dann etwa die XML-Struktur und parametriert über die SAP-Bridge die RFC Aufrufe.

In der Parametrierung zu dem Datenbanksystem ist die Bridge fehlertolerant. Dieses bedeutet, - wie auch schon zum dynamischen Datenbankinterface selbst vorstehend erläutert -, daß die Parameterleisten für den Benutzer transparent aufgefüllt werden, sowie der Rücktransport der Ergebnisdaten auf die anfragende Applikation entsprechend reduziert erfolgt.

Ein etwaiges Corbaserver-Modul kommuniziert somit über eine Bridge mit dem Datenbanksystem.

Es ist insbesondere erlaubt, daß jedwede, also auch fremde, Bridges bei der Instanz des Poolmanagers bzw. des Kommunikations-Moduls, also etwa dem Corbaserver-Modul einregistriert werden. Damit können fremde Applikationen ihre eigenen Zugriffsstrukturen nutzen, beziehungsweise spezialisierte Zugriffsstrukturen benutzbar gemacht werden.

Für die Einregistrierung stellt etwa ein als Kommunikations-Modul fungierendes Corbaserver-Modul die Methoden "Register" bzw. "Deregister" zur Verfügung.

Die Bridges, also die dynamischen Datenbankinterfaces nach der vorliegenden Erfindung, sind selbst so aufgebaut, daß sie einen XML-String annehmen, ihn parsen und formatgerecht für das Datenbanksystem weitergeben. Die Ergebnisse vom Datenbanksystem werden in XML zurück gewandelt, wozu etwa die Methoden "Call" und "UseFlushwrite" zur Verfügung gestellt werden.

Ein Corbaserver-Modul kann auch direkt mit anderen Applikationen kommunizieren. Dazu müssen diese dann über die Corbaspezifische IDL (Interface Definition Language) verfügen. Der Verbindungsaufbau erfolgt dann vorzugsweise als sogenannter "named service".

Auch hier erfolgt die Kommunikation bzw. der Datenaustausch transparent für die Applikation. Somit dient auch hier das Corbaserver-Modul als ein genereller Vermittler zwischen selbständigen Applikationen und Datenbanksystemen.

Im Fall spezieller Applikationen, also etwa der Applikationen GISConnect bzw. GISConnect NT, die ein geographische Informationssystem (GIS) mit einem SAP-System konnektieren, werden von dem Corbaserver-Modul die Methoden für den Verbindungsaufbau zu dem SAP-System und der Datenkommunikation über RFC via SAP-Bridge angewendet.

Wegen der Struktur des Verbindungsaufbaus, der jeweils eigenständigen Instanziierung einer Kommunikation, unterliegt dabei die Anzahl der Verbindungsaufnahmen keiner Beschränkung. Insbesondere können mehrere oder einzelne Applikationen Verbindung zu mehreren oder einzelnen Datenbanksystemen durch den Poolmanager nach der vorliegenden Erfindung konnektiert werden. Falls im Betrieb Einschränkungen der tatsächlich möglichen Verbindungen durch z.B. Speicherplatzgrenzen auftreten, kann eine Lastverteilung, etwa durch die Kommunikation mit einem zweiten oder weiteren Datenverarbeitungssystem(en) mit Poolmanager erreicht werden. Die beiden oder mehr Server kommunizieren dabei dann vorzugsweise über (eine) named pipe(s).

Das erfindungsgemäße Verfahren zum Betrieb eines Poolmanagers ist somit vollständig skalierbar, wobei ein besonderer Vorteil darin besteht daß es zudem aufgabenbezogen skalierbar ist.

Im folgenden werden die verschiedenen vorstehend schon angesprochenen Auführungsformen eines Poolmanagers nach der vorliegenden Erfindung noch einmal systematisch, jedoch ohne Restriktion hierauf, dargestellt, wobei noch einmal besonders darauf hingewiesen sei, daß sämtliche Ausführungsbeispiele nur als jeweilige Konkretisierung im Hinblick aug eine bestimmte Anwendungsaufgabe der vorliegenden Erfindung zu verstehen sind.

Die Kommunikationsanforderung durch die Datenbanksystem-Applikation an den Poolmanager erfolgt vorzugsweise ebenfalls im XML-Format mit einem Datenpaketteil, vorzugsweise einen sogenannten Connectstring innerhalb des XML-Datenpaketes, den der Poolmanager auswertet und der das Datenbanksystem oder die Datenbanksysteme identifiziert, zu dem die Kommunikation aufgebaut werden soll, wobei die Instanz seiner selbst oder des Kommunikations-Moduls jeweils mit mindestens einem zugehörigen dynamischen Datenbankinterface erzeugt oder zugeordnet wird, welches zur Kommunikation der Datenbanksystem-Applikation mit dem angeforderten Datenbanksystem oder Datenbanksystemen dient oder dienen.

Ferner kann das Verfahren zum Betrieb des Poolmanagers dadurch gekennzeichnet sein, daß der Poolmanager ein Corba-Modul, vorzugsweise ein Corbaserver-Modul als Instanz seiner selbst oder als Kommunikations-Modul erzeugt oder zuordnet, so daß die Kommunikation mit der Datenbanksystem-Applikation und/oder oder dem jeweilig zugehörigen dynamischen Datenbankinterface oder Datenbankinterfaces mittels Internet Inter Object Request Broker Protokoll (IIOP) mittelbar oder unmittelbar abwickelt wird.

Auf diese Weise kann der Zugriff unter Verwendung der sogenannten "Common Object Request Broker Architecture" (CORBA) erfolgen, welcher sich als offener Standard für verteilte Netzapplikationen immer größerer Beliebtheit erfreut. Dabei kann jedoch der Zugriff bei einer wachsenden Anzahl von Teilnehmern auf das Datenbanksystem skalierbar ausgestaltet werden, was etwa dadurch gewährleistet werden kann, daß jeweils eine bestimmte Anzahl von Teilnehmern (Clients), welche Zugriff auf das Datenbanksystem haben sollen auf einem sogenannten Corba-Serversystem zusammengefaßt werden, welches den Datenverkehr zum jeweiligen Client mittels IIOP führt und wobei dieses Corba-Serversystem sodann mit dem eigentlichen Datenbanksystem verbunden wird.

Vorzugsweise wird daher ein Corbaserver-Modul als Corba-Modul erzeugt oder zugeordnet, das so beschaffen ist, daß es seine Kommunikation zur Datenbanksystem-Applikation über mindestens eine CORBA-Zwischeninstanz abwickelt, wobei der Poolmanager vorzugsweise zum jeweils erzeugten oder zugeordneten Corbaserver-Modul ein Corbaclient-Modul als Zwischeninstanz erzeugt oder zuordnet, welches vorzugsweise von der Datenbank-Applikation mittels im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese im XML-Format an die Datenbank-Applikation gesendet werden.

Es kann auch so sein, daß der Poolmanager zum jeweils erzeugten oder zugeordneten Corbaserver-Modul ein Corbaapplikationsserver-Modul als Corbaclient-Modul oder diesem zugehörig und damit auch als Zwischeninstanz erzeugt oder zuordnet, welches von der Datenbank-Applikation mittels eines Zwischen-Übertragungsprotokolls, vorzugsweise mittels TCP/IP-Protokoll im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese mittels des Zwischen-Ubertragungsprotolls, vorzugsweise des TCP/IP-Protokolls im XML-Format an die Datenbank-Applikation gesendet werden.

In einer bevorzugten Ausführungsform des Verfahrens zum Betrieb eines Poolmanagers nach der vorliegenden Erfindung, wo ein geographisches Informationssystem (GIS) als Datenbank-Applikation und eine zugehöriges Strukturdatenbanksystem zum Einsatz kommen, kann etwa als Geodatenbank GIS Smallworld (geschützte Marke) und als Datenbanksystem zur Realisierung des Strukturdatenbanksystems ein SAP(geschützte Marke)-System vorgesehen sein. Hierdurch lassen sich die bereits erläuterten Vorteile der vorliegenden Erfindung für ein geographische Informationssystem durch die Verwendung des erfindungsgemäßen Poolmanagers auch für diese Verwendung weiter verbessern.

Der Poolmanager kann natürlich auch in einem System realisiert sein, welches ein Datenverarbeitungssystem mit einem Prozessor und einem Speicher aufweist und das programmtechnisch so eingerichtet ist, daß es nach dem Verfahren zum Betrieb eines Poolmanagers nach der vorliegenden Erfindung arbeitet.

Dabei kann dieses System auch so gestaltet sein, daß es mindestens zwei miteinander über einen Kommunikationskanal verbundene Datenverarbeitungssysteme mit mindestens je einem Prozessor und einem Speicher aufweist, wobei das erste programmtechnisch so eingerichtet ist, daß ein Poolmanager betrieben wird, der das der anfordernden Datenbanksystem-Applikation zugeordnete Corbaserver-Modul jeweils mit mindestens einem zugehörigen dynamischen Datenbankinterface auf dem zweiten Datenverarbeitungssystem erzeugt oder zuordnet, wobei es seine Kommunikation zur Datenbanksystem-Applikation über das Corbaclient-Modul, welches auf dem ersten Datenverarbeitungssystem liegt als CORBA-Zwischeninstanz abwickelt

Ferner ist der Vollständigkeit halber zu erwähnen, daß auch der Poolmanager als Computerprogramm realisiert sein kann, welches Instruktionen aufweist, die zur Durchführung des Verfahrens nach der vorliegenden Erfindung eingerichtet sind.

Vorzugsweise dienen die folgenden Funktionen der Implementierung der vorliegenden Erfindung beim Einsatz eines eines geographischen Informationssystems (GIS) als Datenbanksystem-Applikation und eines SAP-Systems als Datenbanksystem.

### ACP ENGINE.COMAND

Mit dieser Funktion wird der GISConnect ACP vom GIS aus gesteuert.
Folgende Funktionen stehen zur Verfügung:

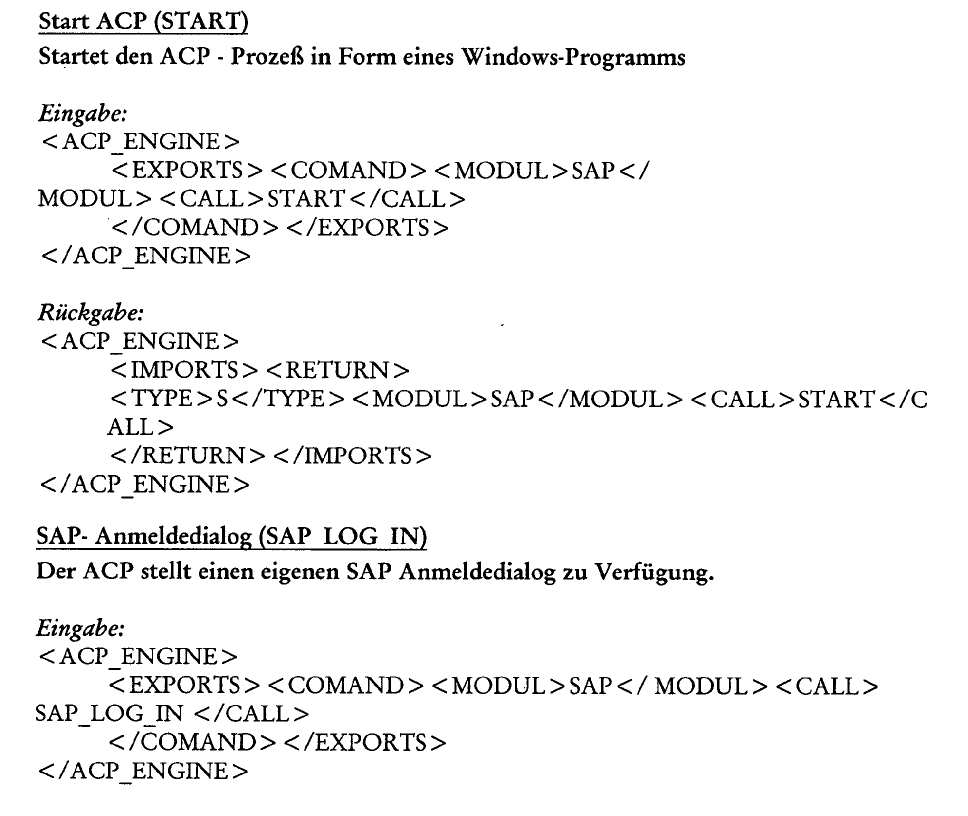

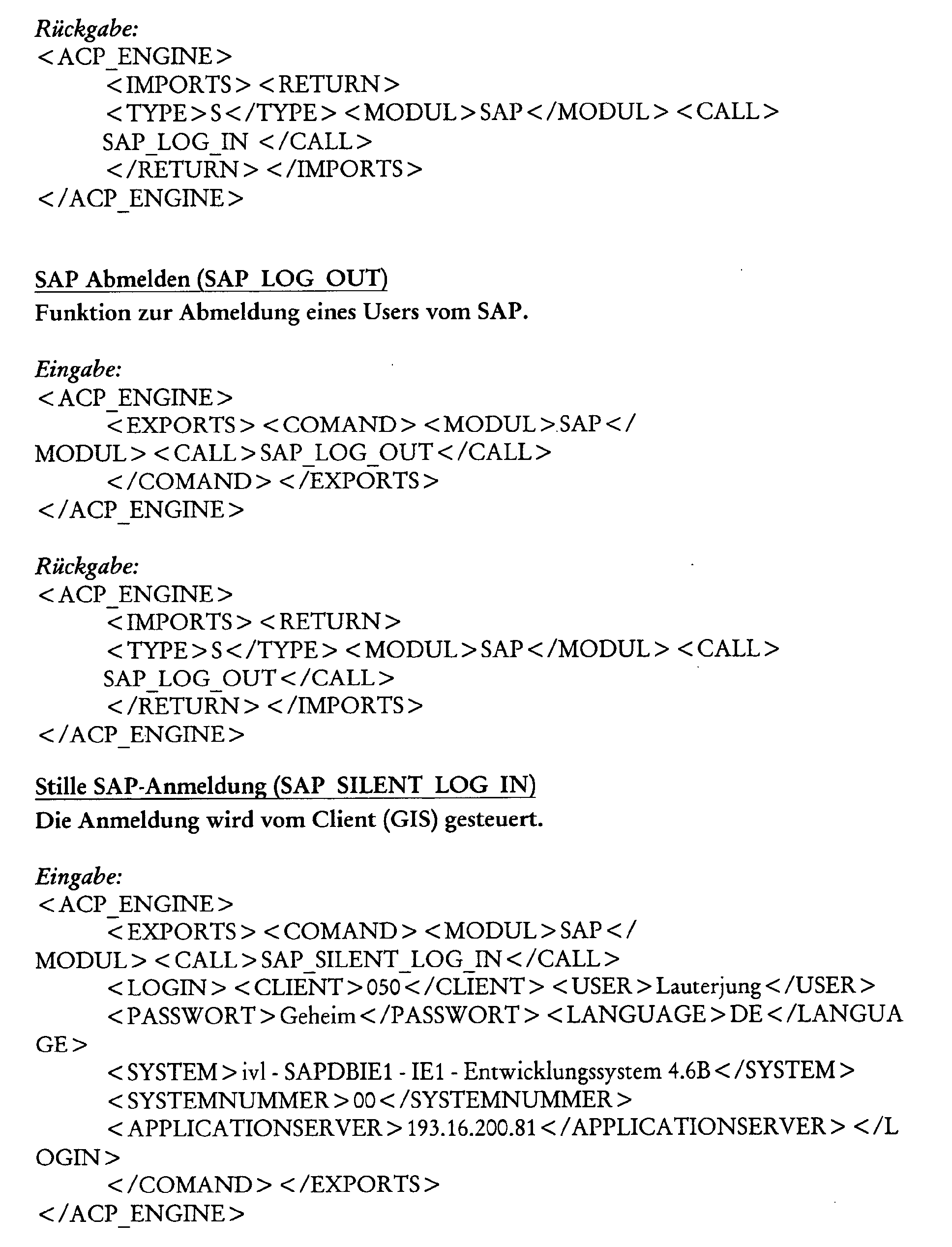

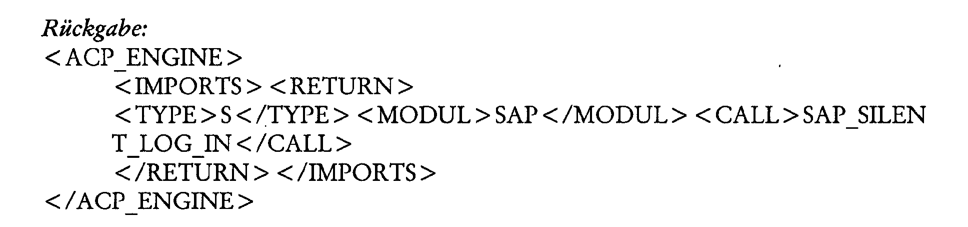

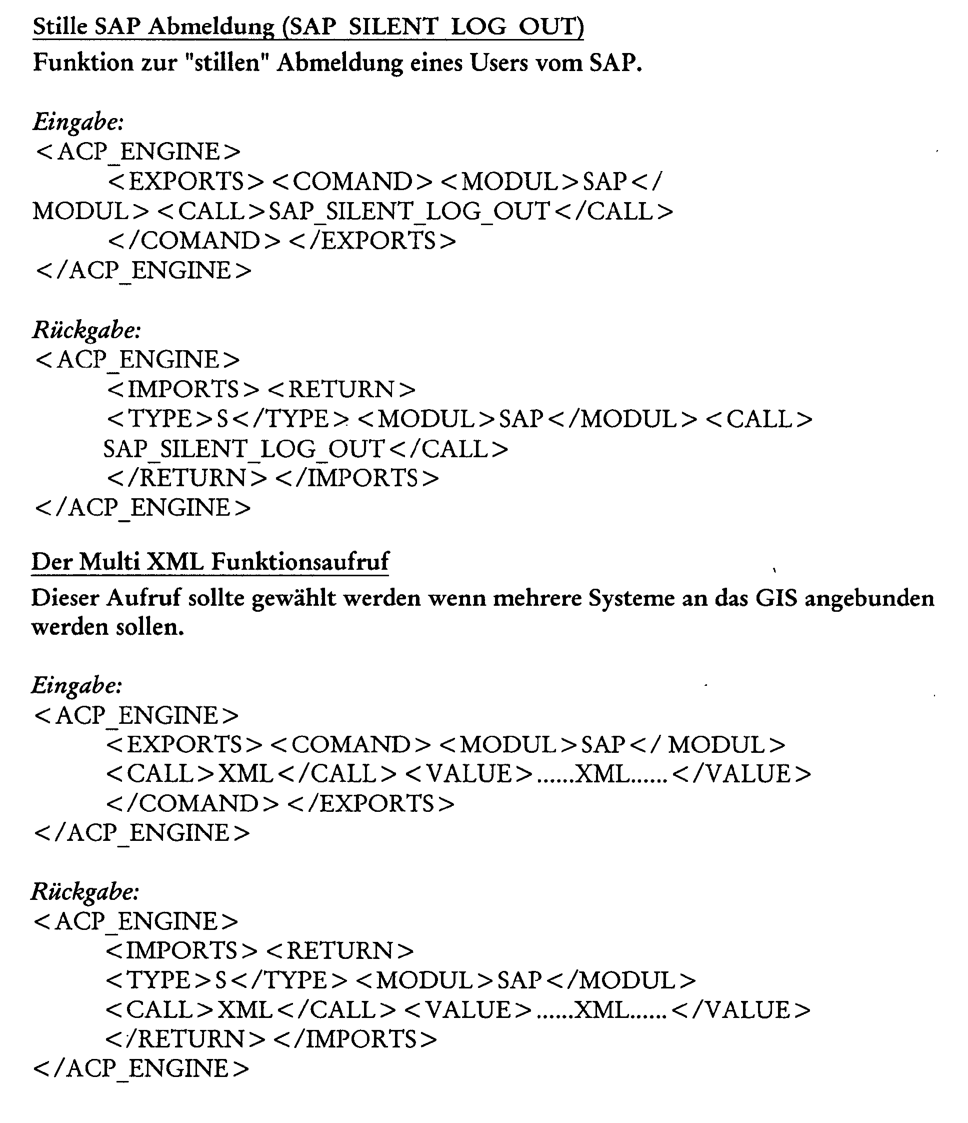

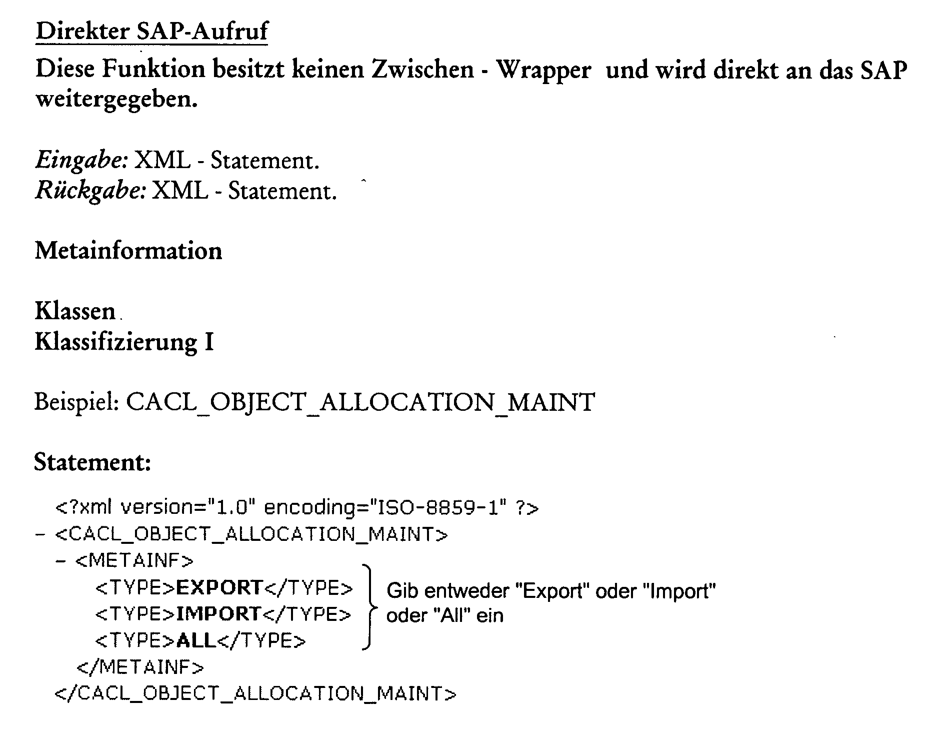

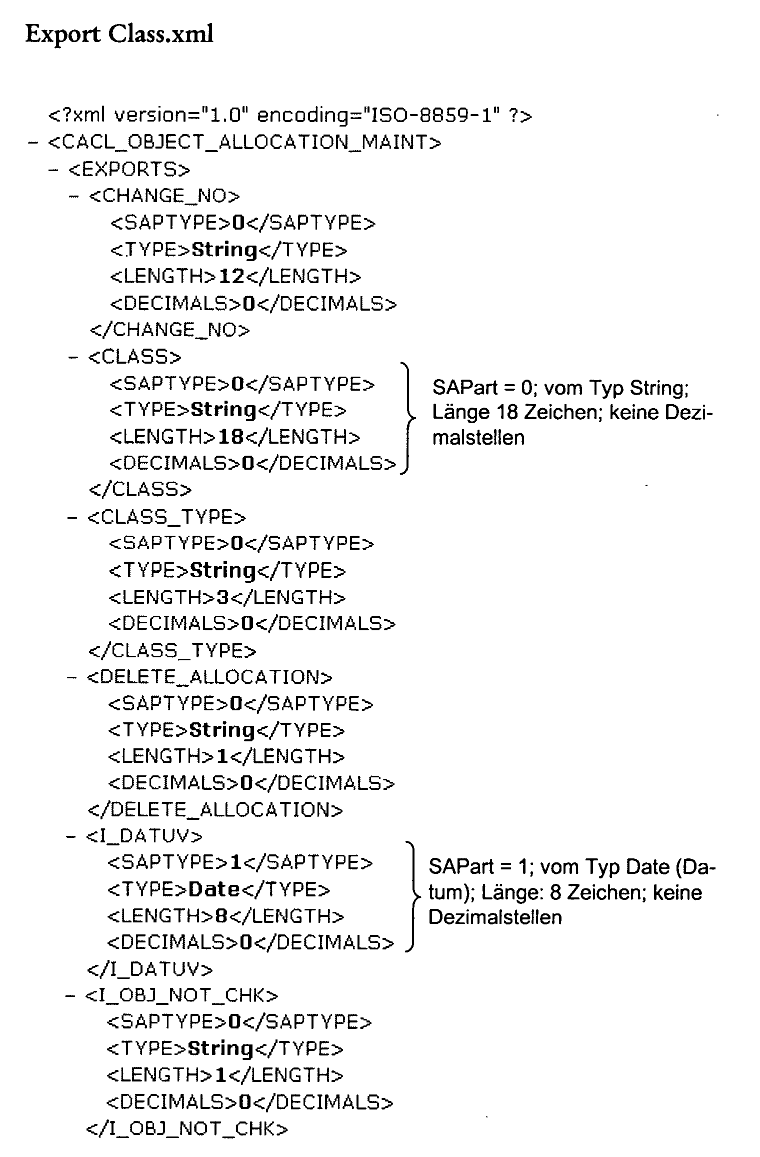

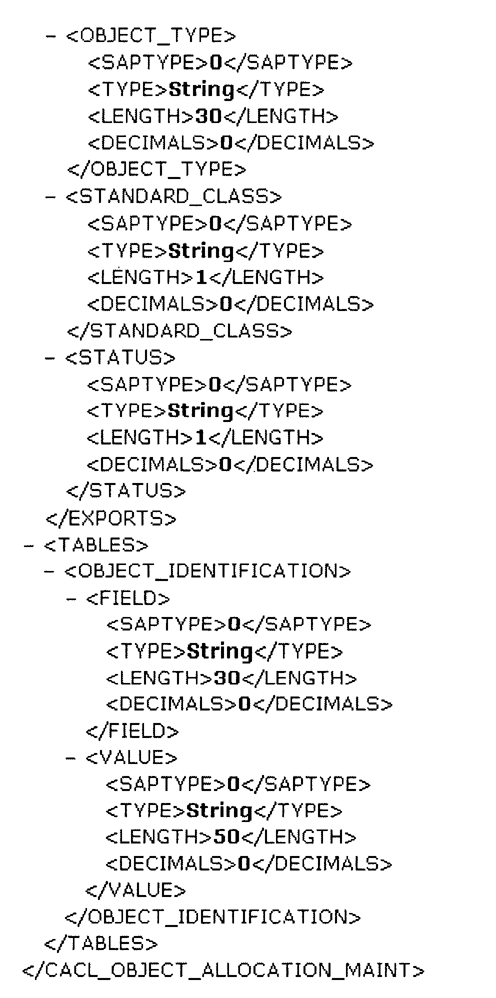

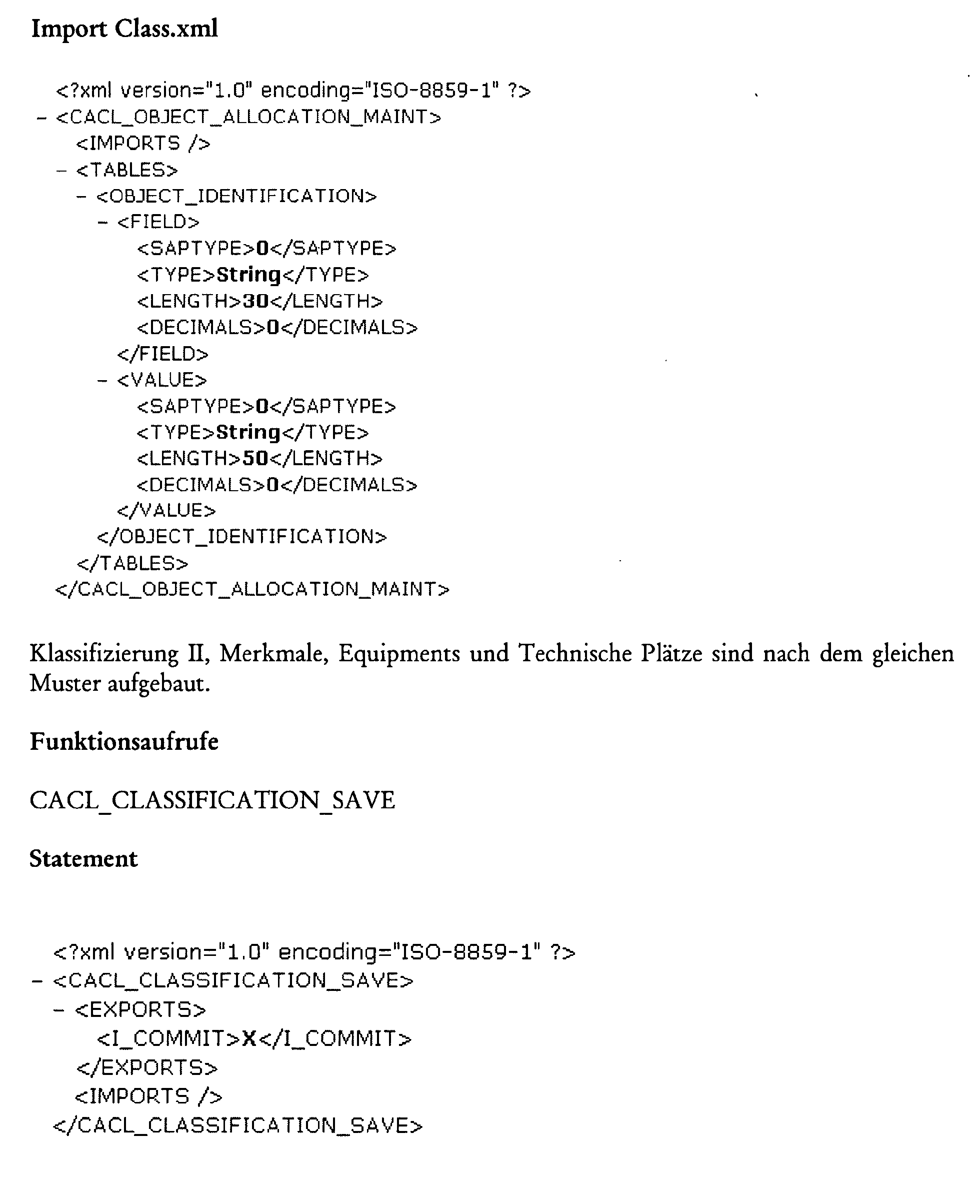

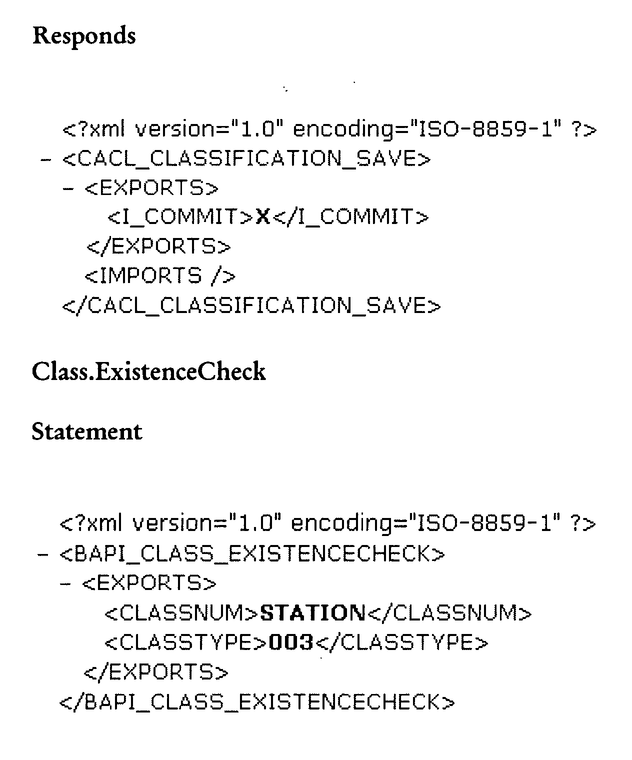

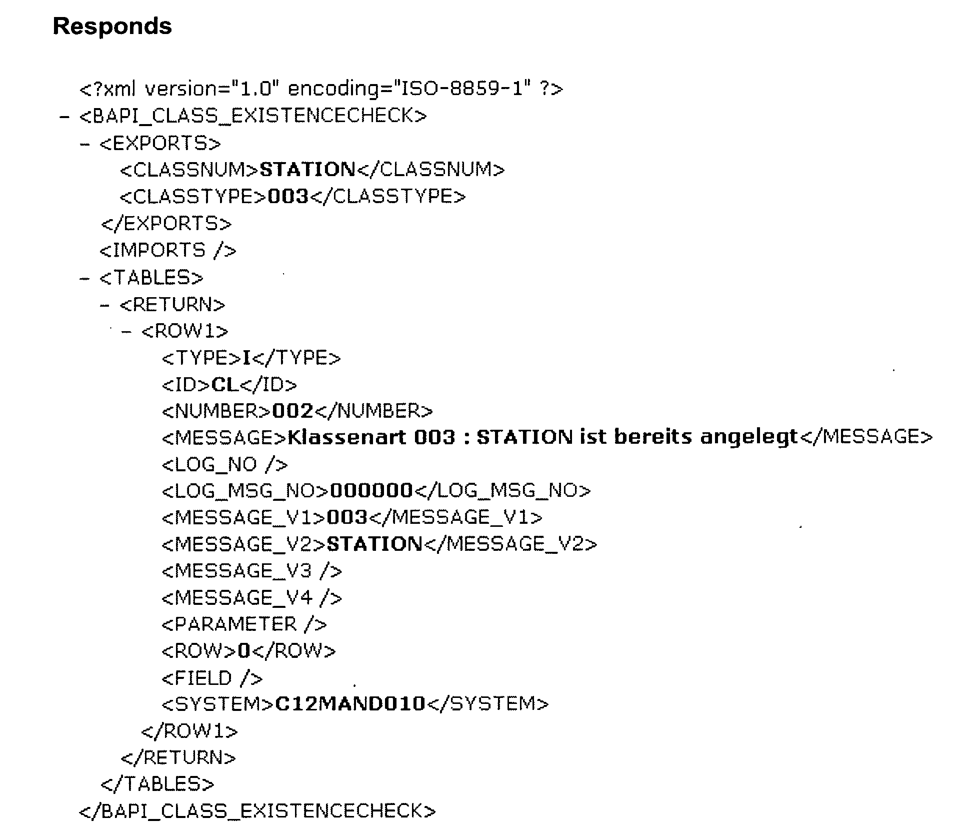

Im folgenden werden nicht einschränkend zu verstehende Ausführungsbeispiele anhand der Zeichnung besprochen. In dieser zeigen:
- Fig. **1a-d**: die Funktionsweise des erfindungsgemäßen Verfahrens zum Betrieb eines dynamischen Datenbankinterface zur Kommunikation einer DatenbanksystemApplikation mit einem Datenbanksystem anhand schematischer Darstellungen des Parameteraustauschs,
- Fig. **2a-c**: verschiedene Möglichkeiten einer Kommunikationsstrecke zwischen einer Datenbanksystem-Applikation und einem Datenbanksystem über ein dynamisches Datenbankinterface nach der vorliegenden Erfindung, und
- Fig. **3**: eine schematische Darstellung einer Ausführungsform eines Poolmanagersystems nach der vorliegenden Erfindung.

Fig. **1a-e** zeigen die Funktionsweise des erfindungsgemäßen Verfahrens zum Betrieb eines dynamischen Datenbankinterface zur Kommunikation einer Datenbanksystem-Applikation mit einem Datenbanksystem anhand schematischer Darstellungen des Parameteraustauschs.

Die hier zu sehenden Abbildungen stellen den Prozeß, insbesondere hinsichtlich des Aufbaus und/oder der Funktionsweise des XML-Protokolls bildlich dar, wobei Fig. **1a** das allgemeine Prinzip veranschaulicht, nach dem ein Funktionsaufruf seitens der Applikation, hier GIS, und dann eine Überprüfung, ob die Funktion vorhanden ist erfolgt, wobei, wenn die Funktion auf Seiten des Datenbanksystems, hier SAP, vorhanden ist, die Funktion ausgeführt wird und die Parameter an die Applikation zurückgegeben werden. Gibt es die Funktion nicht, dann wird vorzugsweise eine Fehlermeldung zurückgegeben.

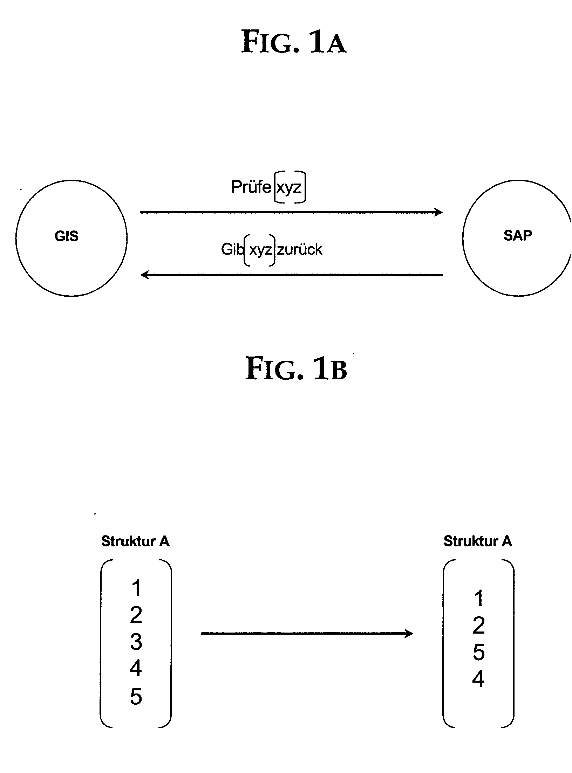

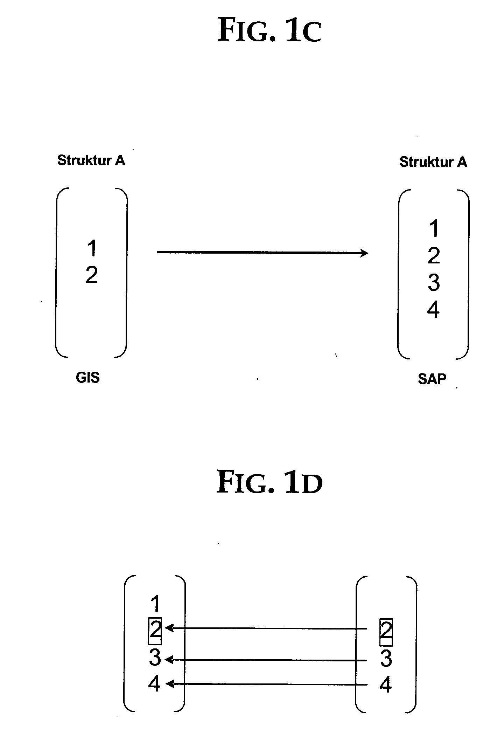

Fig. **1b** zeigt den Fall, daß die übergebenen Parameter nicht übereinstimmen. Die GIS-Seite ist hier zu groß, im SAP sind zu wenig Felder vorhanden, da das Feld 3 nicht existiert. SAP schickt trotzdem die gewünschten Daten zurück, weil SAP in diesem Fall eine Teilmenge der ankommenden GIS-Daten darstellt. Eine Fehlermeldung erfolgt hier somit nicht.

Fig. **1c** zeigt den Fall, daß weniger Parameter von der Applikation zur Verfügung gestellt werden, als SAP als Parameter für den Funktionsaufruf verarbeiten kann. Diese Transaktion ruft ebenfalls keine Fehlermeldung hervor, da hier GIS eine Teilmenge der SAP-Funktionaparameter zur Verfügung stellt. Eine Fehlermeldung erschiene nur, wenn die fehlenden Felder 3 und 4 Pflichtfelder wären. Das Beispiel verdeutlicht das Prinzip, alle Transaktionen 1:1 abzubilden sowie den Anspruch der Fehlertoleranz.

Fig. **1d** zeigt schließlich analog zu Fig. 1c den Fall, wie die SAP-Parameter-Teilmenge vollständig auf die GIS-Seite abgebildet wird.

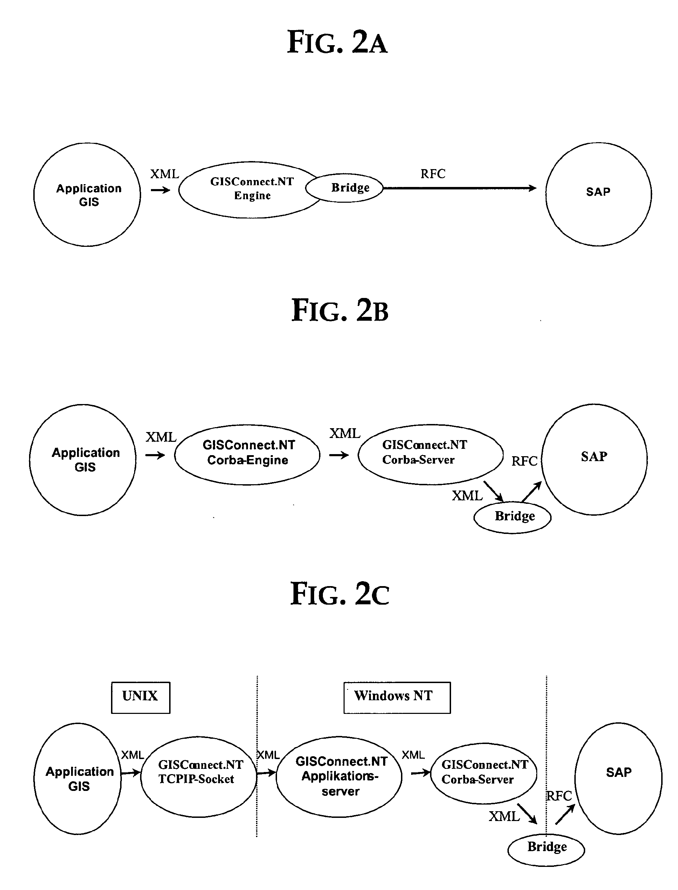

Fig. **2a-c** zeigen verschiedene Möglichkeiten einer Kommunikationsstrecke zwischen einer Datenbanksystem-Applikation und einem Datenbanksystem über ein dynamisches Datenbankinterface nach der vorliegenden Erfindung.

Fig. **2a** zeigt den Fall, daß ein geographisches Informationssystem als Datenbanksystem-Applikation fungiert, wobei es im XML-Format mit einem Corba-Modul als Instanz eines Kommunikations-Moduls, hier GISConnect.NT Engine genannt kommuniziert, welchem wiederum ein dynamisches Datenbanksystem nach der vorliegenden Erfindung, nämlich hier eine Bridge, zugeordnet ist, die das XML-Format auf das Format des Datenbanksystems, also etwa in RFC's umsetzt.

In Fig. **2b** ist zwischen das Corbaserver-Modul, hier GISConnect.NT Corba-Server genannt ein Corbaclient-Modul als Zwischeninstanz geschaltet, welches von der Datenbank-Applikation, hier GIS, im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese im XML-Format an die Datenbank-Applikation gesendet werden. Dem Corbaserver-Modul ist auch hier ein dynamisches Datenbanksystem nach der vorliegenden Erfindung, nämlich eine Bridge, zugeordnet, die das XML-Format auf das Format des Datenbanksystems, also etwa in RFC's umsetzt und umgekehrt die Umsetzung in XML vornimmt.

Fig. **2c** zeigt schließlich den Fall, daß zum jeweils erzeugten oder zugeordneten Corbaserver-Modul ein Corbaapplikationsserver-Modul als weitere Zwischeninstanz erzeugt oder zugeordnet wurde, welches von der Datenbank-Applikation, hier GIS, mittels eines Zwischen-Übertragungsprotokolls, vorzugsweise mittels TCP/IP-Protokoll im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese mittels des Zwischen-Übertragungsprotolls, vorzugsweise des TCP/IP-Protokolls im XML-Format an die Datenbank-Applikation gesendet werden.

Diese Corbaapplikationsserver-Version, vorzugsweise Corba-HTTP-Applikationsserver-Version, geht davon aus, daß die Applikation unter einem beliebigen Betriebssystem oder im Web läuft. Der Poolmanager erzeugt dann vorzugsweise personifizierte Corba-Objekte. Die Verbindung zum Poolmanager läuft vorzugsweise über eine TCP/IP-Socket-Verbindung, wobei das Protokoll XML ist. Der HTTP-Corba-Applications-Server kann etwa unter Windows NT ablaufen, ist grundsätzlich von seiner Struktur her aber plattformunabhängig. Für die Clients ist keine Betriebssystemabhängigkeit gegeben.

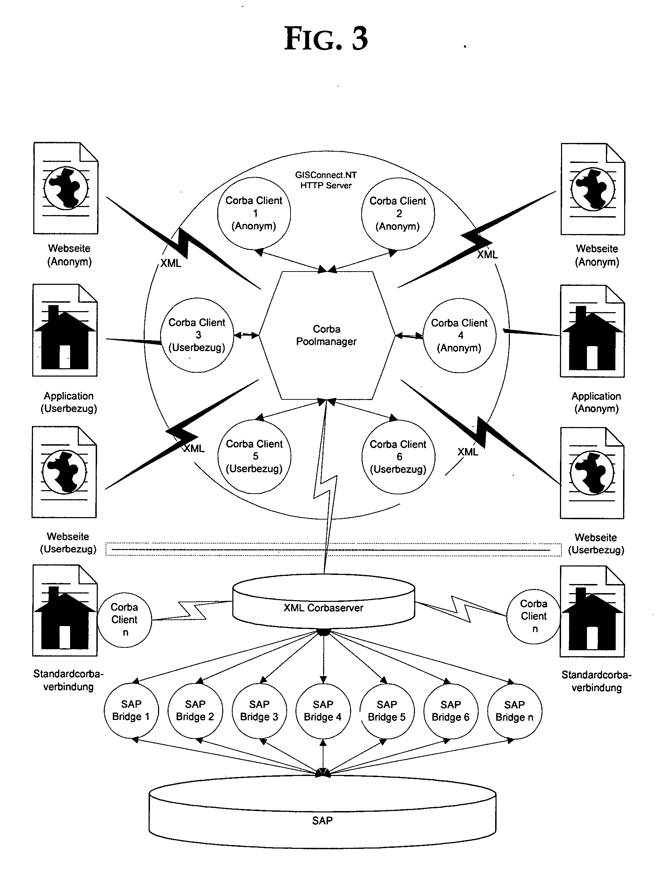

Fig. **3** zeigt eine schematische Darstellung einer Ausführungsform eines Poolmanagersystems nach der vorliegenden Erfindung.

Hier erfolgt der Zugriff auf Datenbanksysteme unter Verwendung der sogenannten "Common Object Request Broker Architecture" (CORBA), welcher sich als offener Standard für verteilte Netzapplikationen immer größerer Beliebtheit erfreut. Dabei kann jedoch der Zugriff bei einer wachsenden Anzahl von Teilnehmern auf das Datenbanksystem skalierbar ausgestaltet werden, was etwa dadurch gewährleistet wird, daß jeweils eine bestimmte Anzahl von Teilnehmern, welche Zugriff auf das Datenbanksystem haben sollen auf einem sogenannten Corba-Applikationsserversystem, oberer Bildteil (GISConnect.NT HTTP Server), zusammengefaßt werden, welches den Datenverkehr zum jeweiligen Client mittels IIOP führt und wobei dieses Corba-Applikationsserversystem sodann mit dem eigentlichen Datenbanksystem, hier SAP, über den im unteren Bildteil zu sehenden XML Corbaserversystem über SAP-Bridges (Ausführungsformen dynamischer Datenbankinterfaces nach der vorliegenden Erfindung) verbunden wird.

Vorzugsweise wird hier ein Corbaserver-Modul als Corba-Modul erzeugt oder zugeordnet, das so beschaffen ist, daß es seine Kommunikation zur Datenbanksystem-Applikation über mindestens eine CORBA-Zwischeninstanz, nämlich ein Corbaclient-Modul, abwickelt, wobei der Poolmanager vorzugsweise zum jeweils erzeugten oder zugeordneten Corbaserver-Modul ein solches Corbaclient-Modul als Zwischeninstanz erzeugt oder zuordnet, welches von der Datenbank-Applikation im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese im XML-Format an die Datenbank-Applikation gesendet werden.

Ein Corbaapplikations-Server-Modul, welches den vorstehenden Umsetzungsprozeß leistet, kann dabei sowohl anonym mit zugeordnetem Corbaclient-Modul (welches dann vorzugsweise selbst nicht in und nach IIOP umsetzt) als auch über namentlich bekannte Benutzer, etwa zur http-Kommunikation (als Corbaclient-Modul, welches dann auch umsetzt), etwa über das World Wide Web genutzt werden. Der Typ der anfragenden Applikation ist davon unabhängig, die Anmeldeform ist abhängig von dem beteiligten Datenbanksystem.

Beim Aufruf eines solchen HTTP-Corbapplikationserver-Moduls werden vorzugsweise mit dem Hochfahren des Systems die Corbaclient-Module 1-n als (anonyme [etwa einem von und in IIOP umsetzenden Corbaapplikations-Server-Modul zugeordnete] oder namentlich gebundene [etwa selbst als Corbaapplikations-Server-Modul fungierende und von und in IIOP umsetzende]) Zugriffsobjekte erzeugt. Gleichzeitig werden bei Beginn einer Sitzung automatisch etwa - im Falle der Verwendung von SAP als Datenbanksystem - SAP-Bridges (SAP Bridge 1-n) mit gestartet bzw. erzeugt. Der Poolmanager verwaltet die ankommenden Anfragen und weist jeweils ein Corbaclient-Modul zu. Ist die Zahl der Corbaclient-Module zu niedrig, bleiben die Anfragen vorzugsweise so lange in einer Warteschleife, bis der Poolmanager einen freien Platz zuweisen kann.

Alle Transaktionen können dabei ohne Benutzer (User)-Bezug ablaufen, d.h. ein Benutzer muß sich nicht mit einem eigenen Profil an das SAP-System anmelden, da die Anmeldung automatisch beim Start des Systems erfolgt (etwa weil der Pool vorkonfigurierte Benutzer [User] benutzt). Die mit XML-bezeichneten Blitze zu den Applikationen in der Abbildung verdeutlichen, daß die Auswertung einer Anfrage im XML-Format erfolgt. Es ist auch möglich, daß sich ein User personenbezogen anmeldet; die Anmeldung erfolgt direkt beim HTTP-Corbaapplikationsserver-Modul, dem ein ein personifiziertes Corbaclient-Modul zugeordnet ist.

Es kann aber - wie bereits gesagt - auch so sein, daß der Poolmanager zum jeweils erzeugten oder zugeordneten Corbaserver-Modul ein Corbaapplikationsserver-Modul als Corba-Client erzeugt oder es einem Corbaclient-Modul nur zugeordnet und damit auch als Zwischeninstanz erzeugt oder zuordnet, welches von der Datenbank-Applikation mittels eines Zwischen-Übertragungsprotokolls, vorzugsweise mittels TCP/IP-Protokoll im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese mittels des Zwischen-Übertragungsprotolls, vorzugsweise des TCP/IP-Protokolls im XML-Format an die Datenbank-Applikation gesendet werden. Fungiert das Corbaapplikationsserver-Modul selbst nicht als Corbaclient-Modul, sondern ist diesem nur zugeordnet, so geschieht dies vorzugsweise deshalb, weil das Corbaclient-Modul dann nur der Zuordnung zu den, vorzugsweise anonymen, Benutzerrechten dient und die Umsetzung von und nach IIOP in diesem Falle nicht vom Corbaclient-Modul, sondern von dem diesem zugeordneten Corbaapplikationsserver-Modul erfolgt.

Der hier im oberen Bildteil zu sehende HTTP-Corba-Applications-Serversystems kann so auch von fremden Applikationen aus gesteuert werden. Damit ist es möglich, daß die fremde Applikation gezielt Daten aus dem Datenbanksystem abrufen kann. Hiermit kann unter der Kontrolle der fremden Applikation eine synchrone oder asynchrone Verbindung zum Datenbanksystem aufgebaut werden.

Diese Eigenschaft des hier zusehenden HTTP-Corba-Applikations-Serversystems erlaubt auch eine gezielte Verwendung in Testsystemen. Insbesondere der direkte Kommunikationstest über eine Webseite ist somit ermöglicht. Insgesamt werden hierdurch Entwicklungszeiten minimiert.

## Patentansprüche

1. Verfahren zum Betrieb eines dynamischen Datenbankinterface zur Kommunikation einer Datenbanksystem-Applikation mit einem Datenbanksystem, welches
(i) einen parametrierten Datenbanksystem-Funktionsaufruf für das Datenbanksystem von der Datenbanksystem-Applikation im XML-Format codiert empfängt,
(ii) diesen, soweit möglich, in ein zum Datenbanksystem kompatibles Format umsetzt,
(iii) den, soweit möglich, entsprechenden parametrierten Datenbanksystem-Funktionsaufruf zum Datenbanksystem hin in einem zum Datenbanksystem kompatiblen Format codiert sendet,
(iv) falls ein Datenbanksystem-Funktionsaufruf erfolgte, ein parametriertes Ergebnis von dem Datenbanksystem in einem zum Datenbanksystem kompatiblen Format codiert empfängt,
(v) falls ein Datenbanksystem-Funktionsaufruf erfolgte, das parametrierte Ergebnis in das XML-Format umsetzt, und
(vi) falls ein Datenbanksystem-Funktionsaufruf erfolgte, das empfangene parametrierte Ergebnis im XML-Format codiert wieder an die Datenbanksystem-Applikation zurücksendet.

2. Verfahren zum Betrieb eines dynamischen Datenbankinterface nach Anspruch 1, **dadurch gekennzeichnet, daß** es von der Datenbanksystem-Applikation den parametrierten Datenbanksystem-Funktionsaufruf für das Datenbanksystem im XML-Format so codiert empfängt, daß dieser neben dem jeweiligen Parameterwert oder Parameterwerten auch eine Identifikation des Parameters, vorzugsweise einen Parameterbezeichner, aufweist.

3. Verfahren zum Betrieb eines dynamischen Datenbankinterface nach Anspruch 1 oder 2, **dadurch gekennzeichnet, daß** es von der Datenbanksystem-Applikation den parametrierten Datenbanksystem-Funktionsaufruf für das Datenbanksystem im XML-Format so codiert empfängt, daß dieser neben dem jeweiligen Parameterwert oder Parameterwerten auch Informationen über die Struktur des Parameters aufweist.

4. Verfahren zum Betrieb eines dynamischen Datenbankinterface nach Anspruch 1, 2 oder 3, **dadurch gekennzeichnet, daß** es von der Datenbanksystem-Applikation den parametrierten Datenbanksystem-Funktionsaufruf für das Datenbanksystem im XML-Format so codiert empfängt, daß dieser neben dem jeweiligen Parameterwert oder Parameterwerten auch Informationen darüber aufweist, ob der jeweilige Parameter ein Export- oder ein Importparameter ist.

5. Verfahren zum Betrieb eines dynamischen Datenbankinterface 1, 2, 3 oder 4, **dadurch gekennzeichnet, daß** es das vom Datenbanksystem empfangene parametrierte Ergebnis in das XML-Format so umsetzt und wieder an die Datenbanksystem-Applikation zurücksendet, daß es neben dem jeweiligen Parameterwert oder Parameterwerten auch eine Identifikation des Parameters, vorzugsweise einen Parameterbezeichner, aufweist.

6. Verfahren zum Betrieb eines dynamischen Datenbankinterface 1, 2, 3, 4 oder 5 **dadurch gekennzeichnet, daß** es das vom Datenbanksystem empfangene parametrierte Ergebnis in das XML-Format so umsetzt und wieder an die Datenbanksystem-Applikation zurücksendet, daß es neben dem jeweiligen Parameterwert oder Parameterwerten auch Informationen über die Struktur des Parameters aufweist.

7. Verfahren zum Betrieb eines dynamischen Datenbankinterface nach Anspruch 1, 2, 3, 4, 5 oder 6 **dadurch gekennzeichnet, daß** es das vom Datenbanksystem empfangene parametrierte Ergebnis in das XML-Format so umsetzt und wieder an die Datenbanksystem-Applikation zurücksendet, daß es neben dem jeweiligen Parameterwert oder Parameterwerten auch Informationen darüber aufweist, ob der jeweilige Parameter ein Export- oder ein Importparameter ist.

8. Verfahren zum Betrieb eines dynamischen Datenbankinterface nach einem der Ansprüche 1 bis 7, **dadurch gekennzeichnet, daß** dieses vor Schritt (iii), vorzugsweise anhand einer eigenen Umsetzungsdatenbasis, überprüft, ob der von der Datenbank-Applikation empfangene Datenbanksystem-Funktionsaufruf von Seiten des Datenbanksystems auch tatsächlich zum Aufruf zur Verfügung steht, wobei es im negativen Falle eine Fehlermeldung im XML-Format codiert wieder an die Datenbanksystem-Applikation zurücksendet.

9. Verfahren zum Betrieb eines dynamischen Datenbankinterface nach Anspruch 8, **dadurch gekennzeichnet, daß** dieses vor Schritt (iii), vorzugsweise anhand einer eigenen Umsetzungsdatenbasis, überprüft, ob alle vom Datenbanksystem unbedingt für die Ausführung des Datenbanksystem-Funktionsaufrufes notwendigen Parameter auch von der Datenbank-Applikation empfangen wurden, wobei es im negativen Falle eine Fehlermeldung im XML-Format codiert wieder an die Datenbanksystem-Applikation zurücksendet.

10. Verfahren zum Betrieb eines dynamischen Datenbankinterface nach Anspruch 9, **dadurch gekennzeichnet, daß** es bei der Umsetzung in Schritt (ii), vorzugsweise anhand einer eigenen Umsetzungsdatenbasis, besonders bevorzugterweise anhand einer Identifikation der Parameter, feststellt, welche von der Datenbanksystem-Applikation empfangenen Parameter auf welche zum Datenbanksystem kompatiblen Parameter umgesetzt werden müssen.

11. Verfahren zum Betrieb eines dynamischen Datenbankinterface nach Anspruch 10, **dadurch gekennzeichnet, daß** es bei der Umsetzung in Schritt (v), vorzugsweise anhand einer eigenen Umsetzungsdatenbasis, besonders bevorzugterweise anhand einer Identifikation der Parameter, feststellt, welche von dem Datenbanksystem empfangenen Parameter auf welche zur Datenbanksystem-Applikation kompatiblen Parameter umgesetzt werden müssen.

12. Verfahren zum Betrieb eines dynamischen Datenbankinterface nach einem der Ansprüche 1 bis 11, **dadurch gekennzeichnet, daß** als Datenbanksystem-Applikation ein geographisches Informationssystem (GIS) und als Datenbanksystem zumindest ein Strukturdatenbanksystem, vorzugsweise mit einer relationalen Datenbank, dient, in welcher strukturelle, d.h. nicht räumliche Daten von Objekten aus einer dem geographischen Informationssystem ebenfalls zugehörigen Geodatenbank hinterlegt sind, wobei die Geodatenbank entsprechend der räumlichen Position von Objekten, vorzugsweise als QuadTreee oder relational, organisiert ist und hierin zumindest die räumlichen Daten, vorzugsweise die geometrischen und/oder geographischen Daten der Objekte hinterlegt sind, wobei zusätzlich zu den räumlichen Daten für die jeweiligen Objekte auch dem jeweiligen Objekt zugeordnete Verweisinformationen in der Geodatenbank hinterlegt sind, die die in der Geodatenbank hinterlegten räumlichen Objektdaten zumindest einem Objekt im Strukturdatenbanksystem zuordnen, und weiterhin bei einem Zugriff auf ein Objekt der Geodatenbank automatisch mittels der hier hinterlegten Verweisinformationen die Zuordnung auf die zugeordneten Objekte des Strukturdatenbanksystems über das dynamische Datenbankinterface herstellt und hierdurch auch den Zugriff auf die hier hinterlegten, zum Objekt der Geodatenbank zugehörigen Strukturdaten erlaubt.

13. Verfahren zum Betrieb eines dynamischen Datenbankinterface nach Anspruch 12, **dadurch gekennzeichnet, daß** zusätzlich zu den strukturellen Daten für die jeweiligen Objekte auch dem jeweiligen Objekt zugeordnete Rück-Verweisinformationen in dem Strukturdatenbanksystem hinterlegt sind, die die in dem Strukturdatenbanksystem hinterlegten strukturellen Objektdaten zumindest einem Objekt in der Geodatenbank zuordnen und die über das dynamische Datenbankinterface vom geographischen Informationssystem abgerufen werden.

14. Verfahren zum Betrieb eines Poolmanagers zur Konnektion einer Datenbanksystem-Applikation mit mindestens einem Datenbanksystem mittels mindestens einem dynamischen Datenbankinterface, welches jeweils nach dem Verfahren nach einem der Ansprüche 1 bis 13 betrieben wird, wobei der Poolmanager Anforderungen von der Datenbanksystem-Applikation zur Kommunikation mit dem Datenbanksystem oder den Datenbanksystemen empfängt und sodann für die anfordernde Datenbanksystem-Applikation eine der anfordernden Datenbanksystem-Applikation zugeordnete Instanz seiner selbst oder eines Kommunikations-Moduls jeweils mit mindestens einem zugehörigen dynamischen Datenbankinterface erzeugt oder zuordnet.

15. Verfahren zum Betrieb eines Poolmanagers nach Anspruch 14, **dadurch gekennzeichnet, daß** er die Kommunikationsanforderung durch die Datenbanksystem-Applikation im XML-Format empfängt und einen Datenpaketteil, vorzugsweise einen sogenannten Connectstring innerhalb des XML-Datenpaketes auswertet, der das Datenbanksystem oder die Datenbanksysteme identifiziert, zu dem die Kommunikation aufgebaut werden soll, wobei die Instanz seiner selbst oder des Kommunikations-Moduls jeweils mit mindestens einem zugehörigen dynamischen Datenbankinterface erzeugt oder zugeordnet wird, welches zur Kommunikation der Datenbanksystem-Applikation mit dem angeforderten Datenbanksystem oder Datenbanksystemen dient oder dienen.

16. Verfahren zum Betrieb eines Poolmanagers nach Anspruch 15, **dadurch gekennzeichnet, daß** der Poolmanager ein Corba-Modul, vorzugsweise ein Corbaserver-Modul, als Instanz seiner selbst oder als Kommunikations-Modul erzeugt oder zuordnet, so daß die Kommunikation mit der Datenbanksystem-Applikation und/oder oder dem jeweilig zugehörigen dynamischen Datenbankinterface oder Datenbankinterfaces mittels Internet Inter Object Request Broker Protokoll (IIOP) mittelbar oder unmittelbar abgewickelt wird.

17. Verfahren zum Betrieb eines Poolmanagers nach Anspruch 16, **dadurch gekennzeichnet, daß** ein Corbaserver-Modul als Corba-Modul erzeugt oder zugeordnet wird, das so beschaffen ist, daß es seine Kommunikation zur Datenbanksystem-Applikation über mindestens eine CORBA-Zwischeninstanz abwickelt.

18. Verfahren zum Betrieb eines Poolmanagers nach Anspruch 17, **dadurch gekennzeichnet, daß** der Poolmanager zum jeweils erzeugten oder zugeordneten Corbaserver-Modul ein Corbaclient-Modul als Zwischeninstanz erzeugt oder zuordnet, welches von der Datenbank-Applikation im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese im XML-Format an die Datenbank-Applikation gesendet werden.

19. Verfahren zum Betrieb eines Poolmanagers nach Anspruch 17 oder 18, **dadurch gekennzeichnet, daß** der Poolmanager zum jeweils erzeugten oder zugeordneten Corbaserver-Modul ein Corbaapplikationsserver-Modul als Corbaclient-Modul oder einem Corbaclient-Modul zugehörig erzeugt oder zuordnet, welches von der Datenbank-Applikation mittels eines Zwischen-Übertragungsprotokolls, vorzugsweise mittels TCP/IP-Protokoll im XML-Format gesendete Daten in das Internet Inter Object Request Broker Protokoll (IIOP) für das Corbaserver-Modul wandelt und umgekehrt vom Corbaserver-Modul in diesem Protokoll empfangene Daten so wandelt, daß diese mittels des Zwischen-Übertragungsprotolls, vorzugsweise des TCP/IP-Protokolls im XML-Format an die Datenbank-Applikation gesendet werden.

20. Verfahren zum Betrieb eines Poolmanagers nach einem der Ansprüche 14 bis 19 soweit diese auf Anspruch 12 oder 13 bezogen sind, **dadurch gekennzeichnet, daß** als Geodatenbank GIS Smallworld (geschützte Marke) und als Datenbanksystem zur Realisierung der Strukturdatenbank ein SAP(geschützte Marke)-System vorgesehen ist.

21. Dynamisches Datenbankinterface System, **dadurch gekennzeichnet, daß** es ein Datenverarbeitungssystem mit einem Prozessor und einem Speicher aufweist, das programmtechnisch so eingerichtet ist, daß es nach dem Verfahren zum Betrieb eines dynamischen Datenbankinterface nach einem der Ansprüche 1 bis 13 arbeitet.

22. Poolmanager System, **dadurch gekennzeichnet, daß** es ein Datenverarbeitungssystem mit einem Prozessor und einem Speicher aufweist, das programmtechnisch so eingerichtet ist, daß es nach dem Verfahren zum Betrieb eines Poolmanagers nach einem der Ansprüche 14 bis 20 arbeitet.

23. Poolmanager System nach Anspruch 22 soweit dieser auf einen der Ansprüche 17 bis 20 rückbezogen ist, **dadurch gekennzeichnet, daß** es mindestens zwei miteinander über einen Kommunikationskanal verbundene Datenverarbeitungssysteme mit mindestens je einem Prozessor und einem Speicher aufweist, wobei das erste programmtechnisch so eingerichtet ist, daß auf ihm ein Poolmanager betrieben wird, der nach dem Verfahren zum Betrieb eines Poolmanagers nach einem der Ansprüche 17 bis 20 arbeitet und der Poolmanager das der anfordernden Datenbanksystem-Applikation zugeordnete Corbaserver-Modul jeweils mit mindestens einem zugehörigen dynamischen Datenbankinterface auf dem zweiten Datenverarbeitungssystem erzeugt oder zuordnet, wobei es seine Kommunikation zur Datenbanksystem-Applikation über die CORBA-Zwischeninstanz, vorzugsweise das Corbaclient-Modul, welches auf dem ersten Datenverarbeitungssystem liegt, abwickelt.

24. Computerprogramm, welches Instruktionen aufweist, die zur Durchführung des Verfahrens nach einem der Ansprüche 1 bis 13 eingerichtet sind.

25. Computerprogramm, welches Instruktionen aufweist, die zur Durchführung des Verfahrens nach einem der Ansprüche 14 bis 23 eingerichtet sind.
